# EUROPEAN PATENT APPLICATION

(11) **EP 4 353 346 A1**
(43) Date of publication of application: **17.04.2024**
(21) Application number: 22201643.8
(22) Date of filing: 14.10.2022
(51) Int. Cl.: B01D 53/86, C01B 21/26, C01B 21/38

(54) **METHOD FOR REDUCING NOX IN A NITRIC ACID PLANT DURING TRANSITORY EVENTS**

(71) Applicant: CASALE SA, 6900 Lugano (CH)
(72) Inventor: CEREA, Iacopo, 6900 Lugano (CH); GARBUJO, Alberto, 22100 Como (IT); OLDANI, Fabio, 21050 Cantello (VA) (IT)
(74) Representative: M. Zardi & Co S.A.

(57) **Abstract**

A method for reducing the NOx emission during start-up and shutdown events of a nitric acid plant, wherein the nitric acid plant comprises a tail gas treatment section (10) including a first catalytic bed (2) for removal of N₂O followed by a second catalytic bed (3) for removal of NOx, wherein during a start-up or shutdown the operation of said treatment section (10) is temporarily modified by adding a NOx reducing agent (4) upstream of said first catalytic bed (2), so that said first catalytic bed (2) provides reduction of NOx.

## Description

### Field of application

The invention is in the field of nitric acid production. In particular, the invention relates to a method for reducing the NOx emission during transitory events in a nitric acid plant.

### Prior art

The industrial production of nitric acid uses a well-known process described in the literature, for example in the Ullmann's Encyclopedia of Industrial Chemistry, Edition 2012 vol. 24, "Nitric Acid, Nitrous Acid and Nitrogen Oxides".

Briefly the process involves the catalytic oxidation of ammonia with an oxidant over a suitable catalyst which is typically a platinum/rhodium catalytic gauze. Product of the ammonia oxidation is a hot nitrogen oxides-containing gas that is absorbed in water in a dedicated column to produce a nitric acid solution and a tail gas.

The tail gas contains nitrogen oxides NOₓ (NO and NO₂) and dinitrogen oxide N₂O which are sources of air pollution and must be removed prior to vent the tail gas into the atmosphere.

In the art several abatement systems are available to remove the nitrogen oxides and the dinitrogen oxide from the tail gas during normal or steady-state operation of the plant. Typically, the NOx and N2O are removed catalytically. Several plants adopt a so-called tertiary abatement system with multiple catalytic beds arranged in series downstream of the absorption column. The term tertiary denotes the location downstream the absorption column.

In more details a tertiary abatement system typically comprises a first catalytic bed and a second catalytic bed arranged in series wherein: the first catalytic bed is exploited for the catalytic decomposition of N₂O into nitrogen and oxygen and in the temperature range of 300 °C to 600 °C; in the second catalytic bed nitrogen oxides NOx are reduced in the presence of a suitable reducing agent into nitrogen and water. Commonly used reducing agents are ammonia and hydrocarbons.

Overall, a tertiary abatement system as above described is capable of reaching a N₂O and NOx abatement efficiency higher than 95% during normal operation of the plant. For instance the NOx content in the tail gas can be reduced to a value lower than 40 ppmv, such as 20 ppmv, which is considered satisfactory in most of the cases.

Unfortunately, during transitory events such as transients of startup or shutdown of the plant, the tail gas temperature is insufficient to sustain an adequate conversion of N₂O and an adequate reduction of NOx due to the poor catalytic activity of the catalyst at low temperature. For example the tail gas temperature in a startup transient may be in the range of 180 °C to 230 °C.

A low conversion of N₂O during said transitory events is typically not considered an issue because the amount of N₂O formed during said transitory events is limited; on the contrary the formation of NOx is a problem. Further to the pollution as such, the discharge of NOx may result in the formation of an undesired plume stack of a yellow to reddish-brown colour. The formation of such visible plume stack is undesired because it induces concern in the population nearby the plant. There is therefore an effort to provide a plume-less startup of nitric acid plants.

Prior art solutions suggest to add items, such as an additional heater, specifically to heat the process gas more quickly during startup. These solutions however have the drawback of requiring the installation of expensive items.

Therefore, it is highly desirable to find a method that allows to reduce the emissions of nitrogen oxides NOx into the atmosphere during transitory events of start-up and shut-down of the nitric acid plant.

### Summary of the invention

The invention aims to overcome the above drawbacks of the prior art. In particular the present invention deals with the problem of the high content of NOx emitted during the transients of startup and shutdown of a nitric acid plant, as a consequence of the deviation from the normal condition of operation. The invention aims also to address the problem of how to reduce NOx emission during transients without requiring the addition of expensive items.

The problem is solved with a method according to claim 1.

The method reduces the NOx emission in a nitric acid plant during a transitory event for startup or shutdown of the plant, wherein:
the nitric acid plant comprises a synthesis section and an absorption section wherein in said synthesis section ammonia is catalytic oxidized to obtain a nitrogen-oxides containing gas and wherein in said absorption section said nitrogen-oxides containing gas is absorbed in water to yield a concentrated nitric acid a tail gas containing NOx and N2O,
the nitric acid plant comprises a treatment section suitable for removing N2O and NOx from said tail gas before it is discharged to atmosphere, said treatment section including a first catalytic bed and a second catalytic bed arranged to be traversed in sequence by the tail gas, wherein during the normal operation of the plant one of said two beds is used for removing N2O and the other of said two beds is used for reducing NOx in the presence of a reducing agent,
wherein during the transitory event the tail gas traverses said catalytic bed for removing N2O in the presence of an additional amount of reducing agent, which is added only during the transitory event, so that said catalytic bed acts temporarily as an additional bed for reducing NOx in the tail gas.

The method is applicable to a nitric acid plant which comprises a tail gas treatment section including a catalytic bed for removal of N₂O followed and a catalytic bed for the reduction of NOx in presence of a reducing agent such as ammonia. The method modifies the operation of said treatment section by introducing an additional amount of reducing agent so that the catalytic bed originally designed to remove N2O during normal operation, operates temporarily as an additional catalytic bed for the reduction of NOx.

Said catalytic first bed and second catalytic bed are traversed in sequence by the tail gas. In a first general embodiment of the invention, the first bed is for removal of N2O and is followed by the second bed for removal of NOx. Hence, in this first embodiment the first bed is temporarily used as an additional bed for removal of NOx. In a second general embodiment, the arrangement is reversed compared to said first embodiment, i.e. the first bed is for removal of NOx and is followed by the second bed for removal of N2O. In this second embodiment, the second bed provides a temporary additional de-NOx capacity during the transitory event.

The terms de-NOx and de-N2O denote the removal of NOx and N2O respectively.

In a broad sense the invention is based on the judicious insight that, in the above described setup, the catalytic bed which is originally designed for removal of N₂O in absence of a reducing agent, can be used to supplement the function of the other bed, that is the removal of NOx, by providing a suitable additional amount of reducing agent so that also said bed for removal of N2O operates in the presence of reducing agent during the transitory event. This can be done on condition that the catalyst of said bed is also suitable for reduction of NOx in the presence of said reducing agent. This is the case of many catalysts for the decomposition of N₂O, including the widely used iron-zeolite catalysts.

The catalytic bed, which is designed for removal of NOx produced during normal operation, may be unable to remove the much greater amount of NOx produced in a transient, particularly during startup. The invention provides an additional de-NOx capacity which is given temporarily by the de-N₂O catalytic bed. The invention is further based on the understanding that the removal of N₂O is not crucial during such transients and in any case the related catalytic bed has a poor catalytic activity at low temperature, whereas the same bed can be used temporarily in an advantageous manner for the task of removing NOx. During transients, the invention may increase the de-NOx capacity, compared to normal operation, by around 50%.

In summary, during the transitory events, the catalytic bed originally designed for the decomposition of N₂O is advantageously used for the reduction of NOx, thanks to the temporary addition of a reducing agent upstream said bed.

During the transitory event, the reducing agent can be added to the gas upstream said catalytic bed for removal of N2O or directly into it. The addition of said reducing agent can be performed in a suitable mixer upstream the catalytic bed.

The reducing agent added between the beds and the reducing agent temporarily added during the transitory event may be the same reducing agent or different reducing agents. The highly preferred reducing agent for both is ammonia.

Once the transitory event is terminated, the catalytic bed for removal of N2O can be returned to the original function, i.e. the N₂O decomposition, by interrupting the supplying of the extra amount of reducing agent. The end of the transitory event may be determined on the basis of one or more operational parameters of the treatment section, such as the temperature of the gas at a selected location, such as the outlet of the first catalytic bed, or the concentration of NOx in the input gas. Preferably the system is returned to the normal operation when the temperature of the tail gas at the inlet of the bed for removal of N2O is equal to or greater than a set minimum temperature, preferably at least 250 °C.

Another advantage is that the downtime of the catalyst in the bed for removal of N2O is minimized. In the typical tertiary abatement configuration, the catalyst is active for N2O decomposition at temperature higher than 380°C, preferably higher than 400°C, more preferably higher than 430°C. During transitory particularly during startup or shutdown, the temperature of the gas incoming the bed for N2O removal remains low. During this period the catalyst is inactive for N2O decomposition. Applying the method of the invention, the bed is used to reduce NOx, actually taking advantage of the catalyst even at low temperature for the NOx reduction.

The preferred reducing agent is ammonia. Another advantage is that, during startup, the exothermic reaction of reduction of nitrogen oxides with ammonia helps to heat the catalytic beds and shorten the duration of the startup. Still another advantage is that, when ammonia is added upstream the first catalytic bed, said ammonia traverses two catalytic beds in series which reduces the risk of ammonia slip. It has to be noted that ammonia slip during startup is particularly undesired because the low temperature of the gas may favour the highly unwanted formation and deposit of explosive ammonium nitrate. Said risk is particularly high downstream the tail gas expander, where the temperature of the gas during startup may fall below 100 °C. The invention reduces this risk.

### Detailed description of the invention

The invention is applicable to newly designed nitric acid plants but it can also be applied to pre-existing nitric acid plants comprising a tertiary abatement system wherein said system includes a first and second catalytic bed arranged in series wherein one of said catalytic beds is exploited for the decomposition of N2O and the other is used for the reduction of NOx.

In a first embodiment, the first catalytic bed is the bed configured for removing N2O and is followed by the second catalytic bed, which is the bed configured for removing NOx. During normal operation, a reducing agent is added between said first catalytic bed and said second catalytic bed to act as a reducing agent for NOx in said second catalytic bed, and no reducing agent is added to the tail gas upstream said first catalytic bed. During the transitory event, the method includes temporarily adding an amount of reducing agent upstream of said first catalytic bed, so that said first catalytic bed during the transitory event operates in the presence of said reducing agent as an additional catalytic bed for the reduction of NOx.

In a second embodiment, the first catalytic bed is the bed configured for removing NOx and is followed by the second catalytic bed, which is the bed configured for removing N2O. During normal operation, a reducing agent is added to the tail gas upstream said first catalytic bed to act as a reducing agent for NOx in said first catalytic bed. During the transitory event, the method includes to temporarily add a further amount of reducing agent upstream said first catalytic bed or between said first catalytic bed and said second catalytic bed, so that said second catalytic bed during the transitory event operates in the presence of said reducing agent as an additional catalytic bed for the reduction of NOx.

Accordingly the catalytic bed designed and used for the removal of N2O during normal operation may be the first bed or the second bed of the sequence.

The following description applies to both the above general embodiments.

The catalytic bed designed for removal of N2O includes a catalyst which is suitable for decomposing N₂O and is also suitable for reducing NOx in the presence of a suitable reducing agent.

The method comprises to modify the operation of said treatment section, during a transitory event for start-up or shutdown, by adding a reducing agent at a suitable location upstream of said catalytic bed for the removal of N2O, so that said catalytic bed operates temporarily as a catalytic bed for the reduction of NOx. When the event is terminated, said addition of reducing agent is discontinued so that the normal operation of said treatment section is resumed. Also said temporarily added reducing agent is preferably ammonia.

The invention is applicable to transitory events when the nitric acid synthesis process significantly deviates from conditions of normal running. Particularly preferably, the invention is applicable to startup events.

According to a particularly preferred embodiment, during the transitory event ammonia is added to obtain a target molar ratio NH₃/NOx in said tail gas. According to various embodiments, said target ratio may be around 1.0 or greater than 1.0 or less than 1.0.

Preferably, during the transitory event, the content of NOx in said tail gas passing through said first catalytic bed is reduced by at least 80% in said first catalytic bed. The content of NOx in said tail gas passing through said second catalytic bed may be further reduced by at least 80%. Said percentage of reduction in the second catalytic bed is referred to the NOx contained in the gas at the inlet of said second catalytic bed.

During the transitory event, the catalytic bed designed for removal of N2O is exploited primarily for removing of NOx. Nevertheless, said catalytic bed may still decompose some N2O based on the operation conditions.

In a preferred application, during the transitory event, the catalytic bed originally designed for removal of N2O operates at a temperature not greater than 250 °C, preferably comprised between 180 °C and 250 °C.

In a still preferred application, during the transitory event, the catalytic bed for the removal of NOx operates at a temperature comprised between 180 °C and 250 °C, preferably comprised between 180 °C and 220 °C.

The first and the second catalytic bed may contain the same catalyst or a different catalyst. Preferably in said catalytic bed for removal of N2O an iron loaded zeolite catalyst is used and more preferably an iron ferrierite catalytic Fe-FER. In the catalytic bed for removal of NOx, a zeolite catalyst can be used. Said zeolite catalyst preferably contains a metal and/or a metal oxide including copper, iron, vanadium, molybdenum, tungsten or a mixture thereof.

The method is applicable during any kind of transitory events, particularly during startup or shutdown. A person skilled in the art is able to distinguish the normal operation of the plant from a startup or shutdown or another transitory event.

Typically during startup the tail gas temperature has not yet attained its ultimate operating temperature whilst during normal operation the tail gas has attained its operating temperature of about 300°C to about 600°C which then does not change any further thereafter beyond typical fluctuations. The startup of the plant precedes the normal operation of the plant, which directly follows the startup.

The transitory event may be identified by one or more of the following parameters: the content of NOx in the incoming tail gas, for example at the inlet of the first catalytic bed; the temperature of the tail gas detected at the outlet of the catalytic bed for removal of N2O; a detected temperature or estimated temperature of the catalytic bed for removal of N2O; the flow rate of the tail gas. All these parameters deviate from normal values during the transitory event, therefore the beginning and the end of the transitory event may be identified on the basis of such deviation.

A temperature of the catalytic bed may be estimated on the basis of the inlet temperature and outlet temperature of the tail gas.

The temperature of the tail gas at the outlet of the catalytic bed for removal of N2O is particularly preferred, as the parameter for discerning the transitory event from normal operation. A minimum value can be defined, for example 250 °C, below which the decomposition of N2O in the catalytic bed is strongly reduced or negligible, making it attractive to use said catalytic bed, according to the invention, for reduction of NOx. Also, this temperature can be easily and practically detected.

A system adapted to carry out the method of the invention may for example identify the end of a startup event by one or more of the following: the content of NOx in the tail gas at the inlet of the first catalytic bed falls below a target value; the temperature of the tail gas leaving the catalytic bed for removal of N2O becomes equal to or greater than a minimum target value; the temperature of the catalytic bed for removal of N2O becomes equal to or greater than a minimum target value.

The temperature of a catalytic bed denotes in some embodiments a temperature of the catalyst in the bed, which may be an average temperature.

In a preferred embodiment a transitory event, particularly a startup event, may be identified by one or more of the following conditions: the tail gas containing more than 600 ppm of NOx; the temperature of the tail gas at the outlet of the catalytic bed for removal of N2O being not greater than 250 °C, particularly in the range 180 °C to 230 °C; the flow rate of the tail gas being no more than 80% or no more than 70% of the nominal flowrate.

Therefore, in the above example, when the input tail gas (at the inlet of the first bed) is detected to contain less than 600 ppm NOx, and/or the tail gas leaving the bed for removal of N2O reaches at least 250 °C, and/or the flow rate of tail gas reaches at least 70% of a design flow rate.

In a preferred application of the present invention, the startup is identified by the content of NOx in the tail gas extracted from the absorption column being comprised between 600 to 1500 ppm, more preferably 600 to 800 ppm.

The symbol ppm denotes parts per million in volume.

According to various embodiments, during the transitory event the majority or the entire amount of reducing agent added to said catalytic beds can be added upstream the first catalytic bed. In some embodiments, where the bed for removal of NOx is the second bed, the addition of reducing agent after the first bed and upstream the second bed can be reduced or interrupted during the transitory event, and is restored to the operational value when the transitory event, such as startup, is completed.

When ammonia is used as a reducing agent, adding the majority of ammonia or all ammonia before the first catalytic bed is advantageous to reduce the risk of ammonia slip under the unfavourable conditions of startup, when the low temperature increases the risk of formation of ammonium nitrate. In an embodiment, also the amount which is normally introduced between the catalytic beds is introduced, temporarily, before the first catalytic bed.

The invention may be applied to revamping of existing plant. In such case, a method of revamping may include the provision of a mixer arranged to mix the tail gas with reducing agent during the transitory event. The method may further include the provision of a control system adapted to carry out the inventive method as above described.

The above mentioned treatment section is part of a tertiary abatement system of a nitric acid plant. Said nitric acid plant may be a single-pressure or a dual-pressure plant. A dual-pressure plant, which is known in the art, is a plant wherein the absorption is performed at a higher pressure than oxidation of ammonia.

Another aspect of the invention is a method for startup of a nitric acid synthesis process wherein:
the nitric acid synthesis process includes steps of catalytic oxidation of ammonia to obtain a nitrogen-oxides containing gas and absorption of said nitrogen-oxides containing gas in water to yield nitric acid a tail gas containing NOx and N₂O,
the nitric acid process further comprises steps of processing the tail gas for removing N2O and NOx before it is discharged to atmosphere, said processing of tail gas including passing the tail gas over a first catalytic bed and a second catalytic bed, wherein one of said two beds is adapted for removing N₂O and the other is adapted for removing NOx, and adding a reducing agent to the tail gas before it traverses the catalytic bed for removing NOx,
the method of startup comprises the temporary addition to the tail gas, at a suitable location, of a further amount of reducing agent so that the catalytic bed which is configured for the removal of N2O during normal operation, temporarily provides a further reduction of NOx in the presence of the reducing agent, said bed comprising a catalyst which is suitable for decomposing N₂O and is also suitable for reducing NOx in the presence of said reducing agent.

### Description of the figures

Fig. 1 is a schematic representation of a N₂O and NOx abatement system of a nitric acid plant under normal operation, in accordance with the prior art.
Fig. 2 illustrates the NOx abatement system of Fig. 1 when operated according to the invention, during a transient such as a startup event or shutdown event.
Fig. 3 illustrates another embodiment of a N₂O and NOx abatement system during normal operation.
Fig. 4 illustrates the system of Fig. 3 when operated according to the invention during a transient.

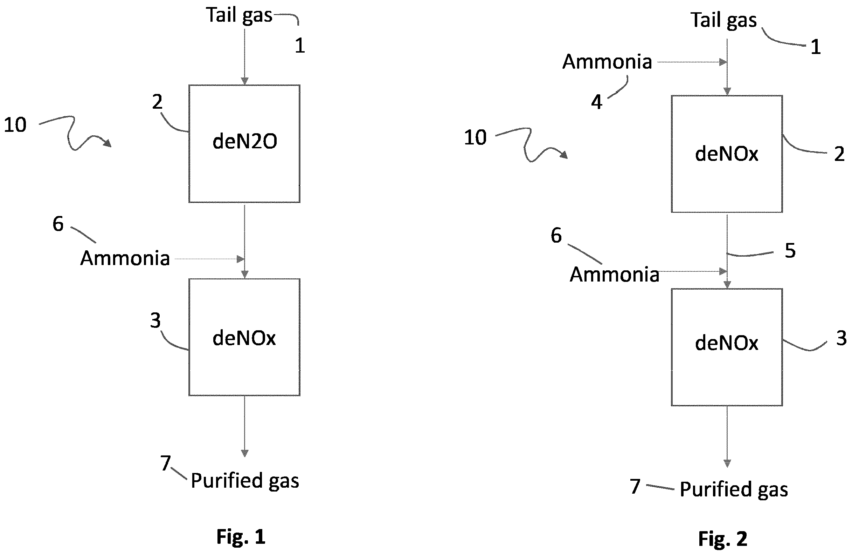

The abatement system of Fig. 1 comprises a first catalytic bed 2 and a second catalytic bed 3 arranged in series wherein the first catalytic bed 2 contains a catalyst suitable for the decomposition of N₂O and the second catalytic bed 3 contains a catalyst suitable for the reduction of NOx. The second catalytic bed 3 is supplied with ammonia 6 to act as a reducing agent for NOx.

The abatement system works basically as follows: a tail gas 1 containing NOx and N₂O which is the effluent of an absorption tower of a nitric acid plant (not shown in the figure) is supplied to the first catalytic bed 2 wherein N₂O is decomposed in the temperature range 300 to 600 °C. Typically, during normal operation of the plant, an abatement efficiency of 98% of N₂O can be reached in said first catalytic bed 2. Note that no reducing agents are injected into the first catalytic bed.

Subsequently the effluent of the first catalytic bed 2 is mixed with ammonia 6 and is then supplied to a second catalytic bed 3 wherein the nitrogen oxides NOx are chemically reduced by ammonia in the temperature range 400 °C to 600 °C. In said second catalytic bed, a NOx abatement efficiency of at least 95 % can be reached during normal operation of the plant. Effluent of the second catalytic bed 3 is a purified gas 7 which can be vented into the atmosphere. Typically the gas 7 is expanded in a tail gas expander to recover energy before being vented.

This abatement system of Fig. 1 is known to perform adequately during normal operation of the plant. However, during transitory events, for example during startup, the temperature of the tail gas 1 and consequently the temperature of the two catalytic beds 2 and 3 is too low to sustain an adequate decomposition of N₂O and an adequate reduction of NOx.

Fig. 2 refers to a transitory event, for example when the temperature of the tail gas extracted from the absorption column is lower than 300 °C or even lower than 250 °C and the formation of N₂O in the nitric acid process is negligible compared to the amount of NOx generated.

During the transitory event, the tail gas 1 containing NOx and N₂O is temporarily mixed with ammonia 4 to achieve a suitable molar ratio in the gas, for example a ratio NH₃/NOₓ greater than 1.0. The gas added with ammonia 4 is fed to the first catalytic bed 2 acting temporarily as an additional bed for reduction of NOx. The first bed 2 is marked "deNOx" in Fig. 2 to underline that it operates substantially as a bed for reduction of nitrogen oxides NOx thanks to the upstream addition of ammonia 4.

The tail gas effluent of the first catalytic bed 2 may still be mixed with ammonia stream 6 before entering the second bed 3. In some embodiment the stream 6 may be temporarily reduced or closed during the transitory event.

Effluent of the second catalytic bed is a purified gas which can be emitted into the atmosphere without risk of formation of a plume stack.

At the end of the transitory event, for example when a startup is completed, the temporary stream 4 is interrupted so that the first catalytic bed 2 returns to normal operation.

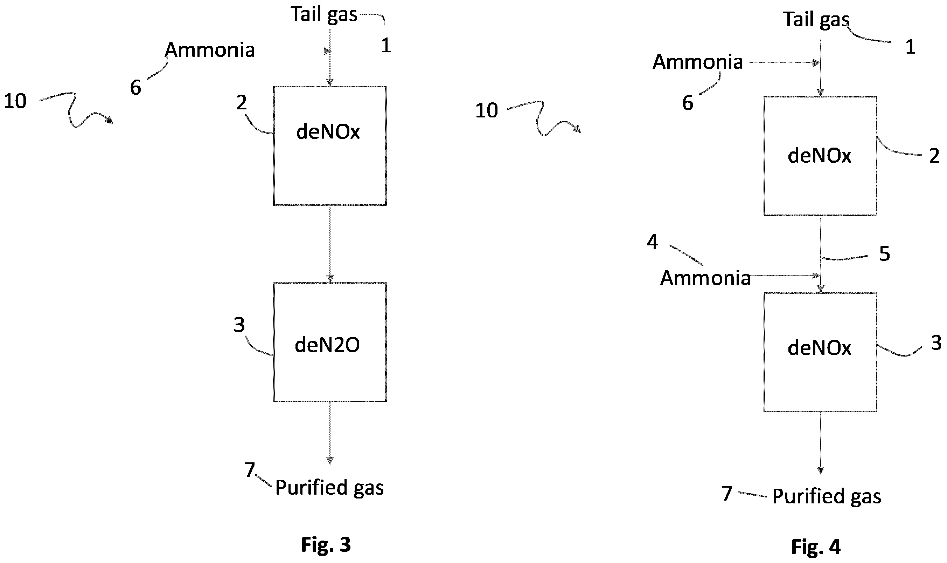

In the embodiment of Fig. 3, the position of the catalytic beds 2 and 3 is inverted compared to Fig. 1, i.e. under normal conditions the first bed 2 reduces NOx in the presence of ammonia and the second bed 3 removes N2O. In such a case ammonia is normally added before the first bed and, during the transitory event, an additional amount of ammonia is added at the same location upstream the first bed 2 and/or between the two beds as shown in Fig. 4.

## Claims

1. Method for reducing the NOx emission in a nitric acid plant during a transitory event for startup or shutdown of the plant, wherein:
the nitric acid plant comprises a synthesis section and an absorption section wherein in said synthesis section ammonia is catalytic oxidised to obtain a nitrogen-oxides containing gas and wherein in said absorption section said nitrogen-oxides containing gas is absorbed in water to yield a concentrated nitric acid a tail gas (1) containing NOx and N2O,
wherein the nitric acid plant comprises a treatment section (10) suitable for removing N2O and NOx from said tail gas (1) before it is discharged to atmosphere, said treatment section (10) including a first catalytic bed (2) and a second catalytic bed (3) arranged to be traversed in sequence by the tail gas, wherein during the normal operation of the plant one of said two beds is used for removing N2O and the other of said two beds is used for removing NOx in the presence of a reducing agent (6),
wherein during the transitory event the tail gas traverses said catalytic bed for removing N2O in the presence of an additional amount of reducing agent, which is added only during the transitory event, so that said catalytic bed acts temporarily as an additional bed for removing NOx from the tail gas.

2. Method according to claim 1, wherein:
the first catalytic bed is the bed used for removing N2O during normal operation, and is followed by the second catalytic bed, which is the bed used for removing NOx;
during normal operation, a reducing agent (6) is added between said first catalytic bed (2) and said second catalytic bed (3) to act as a reducing agent for NOx in said second catalytic bed (3), and no reducing agent is added to the tail gas upstream said first catalytic bed (2),
during the transitory event, the method includes temporarily adding an amount of reducing agent (4) upstream of said first catalytic bed (2), so that said first catalytic bed (2) during the transitory event operates in the presence of said reducing agent as an additional catalytic bed for the reduction of NOx.

3. Method according to claim 1, wherein:
the first catalytic bed is the bed used for removing NOx during normal operation, and is followed by the second catalytic bed, which is the bed used for removing N2O;
during normal operation, a reducing agent (6) is added to the tail gas upstream said first catalytic bed (2) to act as a reducing agent for NOx in said first catalytic bed;
during the transitory event, the method includes to temporarily add a further amount of reducing agent (4) upstream said first catalytic bed or between said first catalytic bed (2) and said second catalytic bed (3), so that said second catalytic bed (3) during the transitory event operates in the presence of said reducing agent as an additional catalytic bed for the reduction of NOx.

4. Method according to any of the previous claims further including that, when the transitory event is terminated, the introduction of said additional amount of reducing agent (4) is discontinued so that the normal operation of said treatment section (10) is resumed.

5. Method according to any of the previous claims wherein during the transitory event said tail gas at the outlet of the absorption section contains at least 600 ppm of NOx, for example 600 to 1500 ppm or 600 to 800 ppm.

6. Method according to any of the previous claims wherein said catalytic bed (2) used for removing N2O during normal operation, is operated during the transitory event at a temperature lower than or equal to 250 °C, preferably comprised between 180 °C and 250 °C.

7. Method according to any of the previous claims wherein during the transitory event the flowrate of the tail gas is 80% or less of the flow rate under normal operation.

8. Method according to any of the previous claims, wherein said catalytic bed (3) used for removing NOx during normal operation, is operated during the transitory event at a temperature comprised between 180 °C and 250 °C, preferably comprised between 180 °C and 220 °C.

9. Method according to any of the previous claims wherein the end of the transitory event is identified by one or more of the following: the content of NOx in the tail gas at the inlet of the first catalytic bed falls below a target value; the temperature of the tail gas leaving the catalytic bed normally used for removal of N2O becomes equal to or greater than a minimum target value; the temperature of the catalytic bed normally used for removal of N2O becomes equal to or greater than a minimum target value.

10. Method according to any of the previous claim wherein the end of a startup event is identified by one or more of the following: the input tail gas at the inlet of the first catalytic bed contains less than 600 ppm NOx; the tail gas leaving the catalytic bed normally used for removal of N2O reaches a temperature of at least 250 °C; the flow rate of tail gas reaches at least 70% of a design flow rate.

11. Method according to any of the previous claims wherein during normal operation the first bed is the bed for removing N2O and the second bed is the bed for removing NOx; during the transitory event, the amount of reducing agent (6) which is added between said first catalytic bed (2) and said second catalytic bed (3) is reduced compared to the amount added during normal operation or is null.

12. Method according to any of the previous claims wherein said reducing agent is ammonia, and the reducing agent temporarily added during the transitory event is also ammonia.

13. Method according to any previous claims, wherein the catalytic bed (2) normally used for removal of N2O contains an iron loaded zeolite catalyst, preferably an iron ferrierite catalytic Fe-FER.

14. Method according to any previous claims, wherein the catalytic bed (3) normally used for reduction of NOx contains a zeolite catalyst preferably containing a metal and/or a metal oxide including copper, iron, vanadium, molybdenum, tungsten or a mixture thereof.

15. Method according to any of the previous claims, wherein during normal operation the first bed is the bed for removing N2O and the second bed is the bed for reduction of NOx; wherein during the transitory event ammonia (4) is added upstream of said first catalytic bed (2), and the amount of added ammonia is determined to obtain a target molar ratio NH₃/NOx in said tail gas (1) at the inlet of the first catalytic bed.

16. Method according to any of the previous claims, wherein said treatment section (10) is part of a tertiary abatement system of a nitric acid plant and said plant is a single-pressure or a dual-pressure plant.
